# EUROPEAN PATENT SPECIFICATION

(11) **EP 0 500 398 B1**
(45) Date of publication and mention of the grant of the patent: **16.04.1997**
(21) Application number: 92301512.7
(22) Date of filing: 24.02.1992
(51) Int. Cl.: G09G 3/32, G09G 3/00

(54) **Apparatus for driving photoelectric element array**
Steuergerät für eine Matrix von photoelektrischen Elementen
Dispositif de commande d'une matrice d'éléments photoélectriques

(30) Priority: 25.02.1991 JP 54102/91
(43) Date of publication of application: 26.08.1992
(73) Proprietor: VICTOR COMPANY OF JAPAN, LTD., Yokohama-Shi, Kanagawa-Ken (JP)
(72) Inventor: Konno, Toshio, Hoya-shi, Tokyo-to (JP); Nakagaki, Shintaro, Miura-shi, Kanagawa-ken (JP); Negishi, Ichiro, Yokosuka-shi, Kanagawa-ken (JP); Suzuki, Tetsuji, Yokosuka-shi, Kanagawa-ken (JP); Tatsumi, Fujiko, Yokohama-shi, Kanagawa-ken (JP); Takahashi, Ryusaku, Yokosuka-shi, Kanagawa-ken (JP); Maeno, Keiichi, Yokosuka-shi, Kanagawa-ken (JP)
(74) Representative: Crawford, Andrew Birkby

(56) References cited:
- EP-A- 0 458 270
- NL-A- 7 317 129
- US-A- 4 799 071
- US-A- 4 910 401

## Description

### BACKGROUND OF THE INVENTION

The present invention relates to an apparatus for driving photoelectric element arrays.

Photoelectric element arrays such as light receiving and emitting element arrays that have many light receiving and light emitting elements arranged in a required status, respectively are conventionally used as image sensors in photographic apparatus and the like, and as display devices in display apparatus for example. When optical elements such as light receiving or light emitting elements are arranged to configure a photoelectric element array for the generation of image signals of a high degree of fineness, or when they are used to project reproduced images having a high degree of fineness, the photoelectric element array must of course be configured by arranging an extremely large number of optical elements.

However, when photoelectric element arrays are configured by the arrangement of many optical elements, so as to enable their use in equipment having a high degree of resolution, the yield of the arrays drops and so they become more expensive. Furthermore, along with an increase in the number of optical elements comes an increase in the size of the array and so it becomes necessary to have a large size for optical parts (such as focussing lenses, mirrors, prisms and the like) that are used in combination with the array. Because of this, an application apparatus for the array becomes large and its price also increases. In addition, so as not to make the application apparatus become large, any increase in the number of optical elements when the size of the array is the same poses difficulties for the manufacture of the array. Assuming that such an array was manufactured, the yield would become low and the application apparatus would be high priced.

The present invention provides apparatus for recording image information as a charge image in a spatial light modulator, comprising:
a plurality of photoelectric element arrays, each array comprising a plurality of photoelectric elements aligned with each other, the plurality of arrays being arranged such that (i) the lines of photoelectric elements are parallel, (ii) the photoelectric elements in adjacent arrays are offset in the direction of said lines by a predetermined offset and (iii) said lines are separated by a distance equal to an integral multiple of the predetermined offset;
means arranged to drive the photoelectric element arrays according to successive pixel data representing the image information to cause the photoelectric elements to emit light beams according to the pixel data; this means comprising:
storage means arranged to store pixel data of a plurality of pixels successively and to output the stored data of said plurality of pixels simultaneously; and
controller means responsive to the output pixel data to control the photoelectric elements to emit the light beams such that the photoelectric elements in each photoelectric element array are simultaneously driven and the photoelectric elements of successive photoelectric element arrays are successively driven according to a first predetermined timing; and
means arranged to guide the emitted light beams to the spatial light modulator according to a second predetermined timing whereby the charge image is formed in the spatial light modulator by the emitted beams of light.

The present invention thus provides an apparatus for driving photoelectric element arrays arranged in parallel, in which resolution equivalent to a case where the arrays are aligned is achieved.

Other objects and advantages of the present invention will become apparent from the detailed description to follow taken in conjunction with the appended claims.

### BRIEF DESCRIPTION OF THE DRAWINGS

FIG. 1 is a block diagram of an embodiment of a photoelectric element array drive apparatus of the present invention;
FIG. 2 is a block diagram of another embodiment of the photoelectric element array drive apparatus of the present invention;
FIG. 3 is a time chart for describing the operation of the photoelectric element array drive apparatus of the present invention;
FIG. 4 is a view showing an example of the connections of photoelectric element arrays;
FIG. 5 is a view showing another example of the connections of the photoelectric element arrays;
FIG. 6 is a perspective view of an application apparatus of the photoelectric element arrays of the present invention; and
FIG. 7 is a side sectional view of an example of the configuration of spatial light modulator.

### DETAILED DESCRIPTION OF THE PREFERRED EMBODIMENTS

The following is a detailed description of embodiments of the present invention, with reference to the appended drawings.

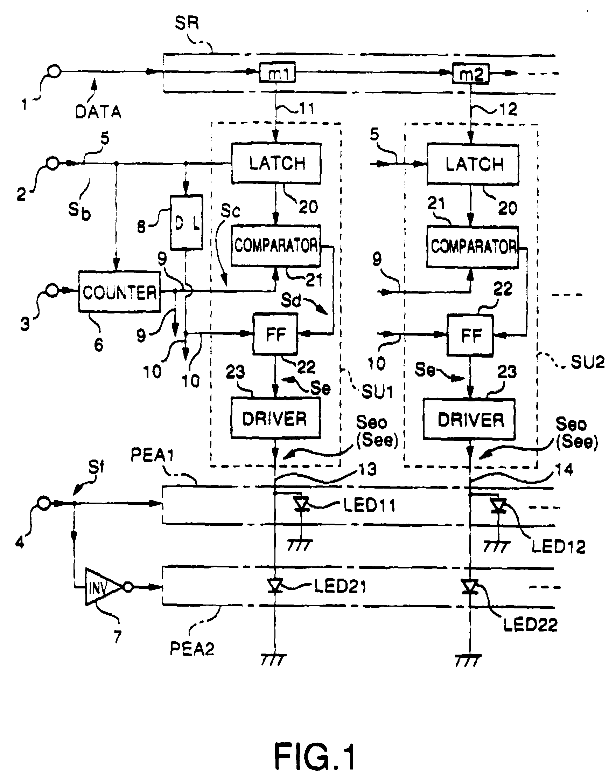

In FIG. 1, FIG. 2 and FIG. 4 through FIG. 6, there are provided photoelectric element arrays PEA1 and PEA2. Both of these arrays are configured by the arrangement of many optical elements in a required arrangement pattern. The optical elements are light emitting elements, so that those arrays become light emitting element arrays.

The arrays PEA1 and PEA2 that are shown in each of the embodiments and the figures are light emitting element arrays that use light emitting elements (light emitting diodes LED) as the optical elements. The array PEA1 shown in the figures has a plural number of light emitting elements LED11, LED12, ... arranged in line separated by a predetermined gap 2Ep measured from center to center. In addition, the array PEA2 also has a plural number of light emitting elements LED21, LED22, ... arranged in line separated by the predetermined gap 2Ep.

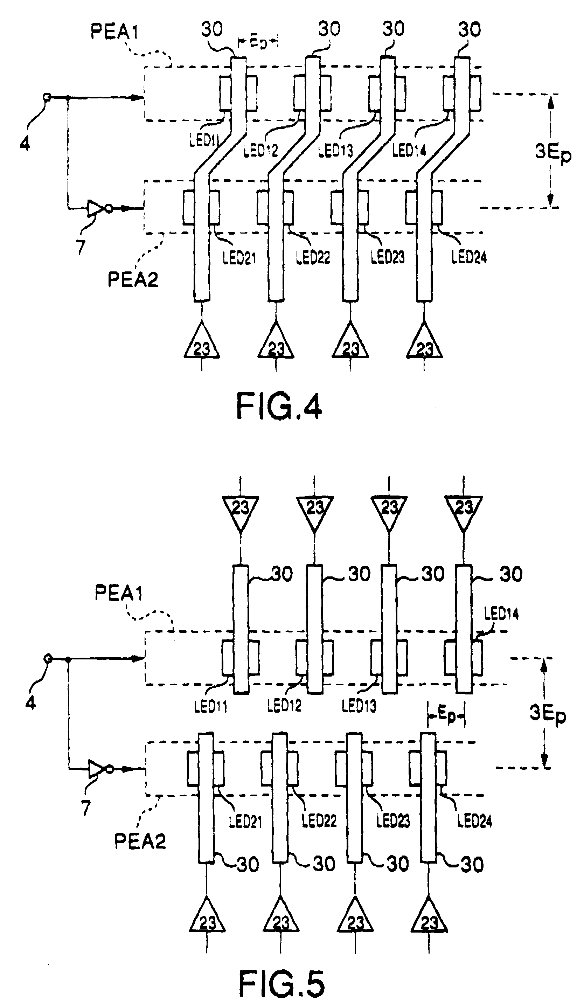

The array PEA1 and the array PEA2 have the respective light emitting elements LED11, LED12, ... and the light emitting elements LED21, LED22, ... aligned parallel to each other and in the same direction, and furthermore, are separated by one half of the gap 2Ep of the light emitting elements, that is, by an integral multiple of Ep. In addition, in the direction the light emitting elements LED11, LED12, ... and LED21, LED22, ... are each aligned, the LED11, LED12, ... and the LED21, LED22, ... are arranged in a status where they are displaced by the required distance Ep in their directions of alignment as shown in FIG. 4 and FIG. 5.

In FIG. 1, FIG. 2, FIG. 4 and FIG. 5, there is shown the case where the two photoelectric element arrays PEA1, PEA2 are arranged but the present invention can be applied with respect to cases where N or more (where N is a natural number of two or larger) photoelectric element arrays PEA1 to PEAn are used.

When N number of photoelectric element arrays PEA1 to PEAn are used, those arrays are arranged to satisfy the following condition. That is, the N number of the arrays PEA1 to PEAn (not shown) are arranged in parallel in the direction in which the light emitting elements LED11, LED12, ... through LEDn1, LEDn2 (not shown) are aligned. Adjacent arrays are arranged so that a required gap between them becomes an integral multiple of the gap Ep (where Ep corresponds to 1/N of the gap N·Ep between light emitting elements in each array) described above. In the direction the light emitting elements LED11, LED12, ... through LEDn1, LEDn2, ... are each aligned, the LED11, LED12, ... and the LEDn1, LEDn2, ... are arranged in a status where they are displaced by the required distance Ep like shown in FIGS. 4 and 5.

The reason why the gap between adjacent light emitting elements in a single photoelectric element array is N·Ep, is as follows: When N number of the arrays PEA1 through PEAn are used in the present invention, by employing the gap N·Ep, a degree of resolution, equivalent to the degree of resolution obtained when the light emitting elements of all portions of the N number of arrays are arranged in lines with a gap between adjacent light emitting elements of Ep, can be obtained when there are N number of the arrays arranged in parallel in space are successively and serially driven on the time axis.

The description below is for the case when the photoelectric element arrays PEA1 and PEA2 are configured with the respective M number of light emitting elements LED11, LED12 through LED1m (not shown), LED21, LED22 through LED2m (not shown) arranged in lines.

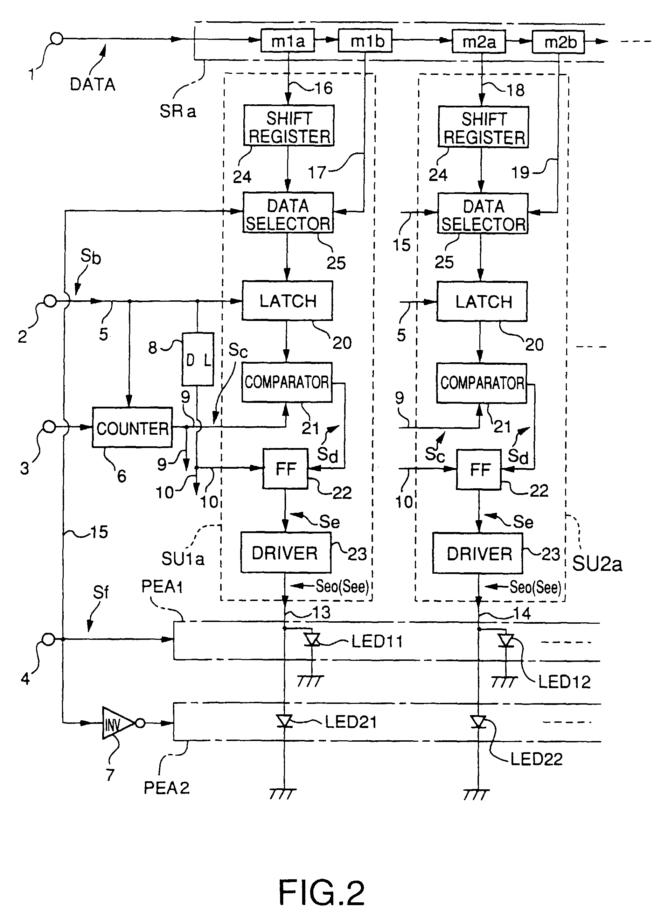

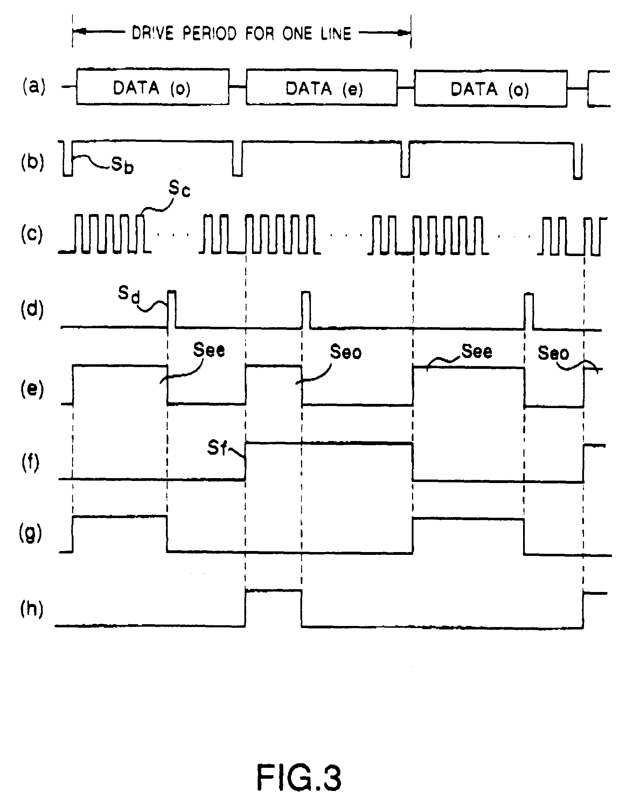

Examples of apparatus for driving photoelectric element arrays of the present invention shown in FIG. 1 and FIG. 2 are embodiments for the case when the number N of the arrays is 2. In the embodiments, one of the two arrays PEA1 and PEA2 becomes operable when selected by a switching control signal Sf {Refer to FIG. 3 (f)} supplied to a terminal 4 from a control circuit (not shown). More specifically, during the period when the switching control signal Sf is at a high level, it is possible for the array PEA1 to operate, while a low level the array PEA2 to operate.

The description will commence with the apparatus for driving photoelectric element arrays of the present invention shown in FIG. 1. SR denotes a shift register, and from an input terminal 1 to this shift register SR are supplied successive data (pixel data) that determine the light emission intensities of the many light emitting elements that configure the arrays PEA1 and PEA2.

Those data comprise the number of bits that express the brightness gradations necessary for an image. That is, if the number of gradations is 256 for example, then the pixel data for a single pixel portion is made 8-bit digital data. In the description below, the data for the single pixel portion is A bits. Then, a serial-in/parallel-out type of shift register having a storage capacity of (number M of light emitting elements in each array) x (number of bits A of a pixel data) = MA bits is employed as the shift register SR. In the shift register SR, m1, m2, shown in respective blocks are for storage divisions each of which has the bit number A for each pixel portion.

In the shift register SR, a number M of storage divisions that is equal to at least the number M of light emitting elements in each array are provided.

In FIG. 1, each of the M number of light emitting elements LED11 through LEDm1 in the array PEA1 emits light of a light intensity in accordance with individual corresponding pixel data. All of the light emitting elements LED11 through LED1m operate so as to hold their respective light emission intensities over a first predetermined period. In addition, for a second predetermined period, following on from the first period, each of the M number of light emitting elements LED21 through LED2m in the array PEA2 emits light of an intensity in accordance with individual corresponding pixel data. Then, all of the light emitting elements LED21 through LED2m operate so as to maintain their respective light emission intensities for during the second predetermined period.

In this manner, the two arrays PEA1 and PEA2 that have the respective M numbers of light emitting elements displaced by the required distance Ep in their directions of alignment, emit light serially and successively on the time axis so that a degree of resolution equivalent to the degree of resolution obtained when all of the light emitting elements (2M) in the arrays PEA1 and PEA2 are arranged in a line, is obtained by a light emission status of 2M number of light emitting elements in the two arrays arranged in parallel lines in space.

The following is a detailed description of the operation of the drive apparatus of FIG. 1, with reference to FIG. 3.

In order to cause the two photoelectric arrays PEA1 and PEA2 that are arranged in parallel, to emit light sequentially on and serially on the time axis as has been described above, pixel data array that has the information to be successively given to the light emitting elements in the two arrays during a drive period for one line shown in FIG. 3 is created in the following manner for example.

More specifically, pixel data array of an original image that are successively arranged on the time axis in a video signal obtained by scanning the image, are converted into pixel data arrays of N strings corresponding to the N number of arrays. The pixel data arrays of N strings are arranged in series on the time axis by a specific order, to be a set of time-series pixel data.

As shown in FIG. 1, when the two photoelectric element arrays PEA1 and PEA2 are configured so as to be provided with M number of light emitting elements respectively, the pixel data arrays that are supplied from the input terminal 1 to the shift register SR are as shown in FIG. 3 (a), the two data arrays of the data (o) that is to be supplied to the array PEA1, and the data (e) that is to be supplied to the array PEA2.

The pixel data array comprising the pixel data of odd numbers of the successive pixel data that configure the original pixel data array is used as the (o) data, and the pixel data array comprising the pixel data of the even numbers of the successive pixel data that configure the original pixel data array is used as the (e) data.

As has already been described, when the data (o) and the data (e) are supplied serially on the time axis from the input terminal 1 for each line drive period to the shift register SR shown in FIG. 1, which is provided with the storage divisions each having the bit number A for each pixel portion and being provided in a number that corresponds to the number M of light emitting elements in at least one array, the data (o) is first supplied to the shift register SR.

That is, first the M number of pixel data which constitute the data (o) are stored in the divisions ml, m2 - mn. When it is finished, the M number of pixel data are outputted at the same time from the respective storage divisions m1, m2 - mn. The outputted M number of pixel data are respectively latched to M number of latch circuits 20, 20, ... that are connected to the M number of storage divisions m1, m2 - mn via the connection lines 11, 12, ... .

This is done by a latch pulse Sb shown in FIG. 3 (b) which is supplied to each of the latch circuits 20, 20, ..., via lines 5 from a input terminal 2 at the time of the completion of the successive storage of the M number of pixel data configuring the data (o), to the storage divisions m1, m2 - mn in the shift register SR.

The circuits shown in their entirety by the frames SU1, SU2, ... indicated by dotted lines in FIG. 1 are drive signal generation circuits that are provided with respect to the respective storage divisions m1, m2 in the shift register SR. Each of these drive signal generation circuits SU1, SU2, ... is provided with the latch circuit 20, a comparison circuit 21, a flip-flop 22 and a drive circuit 23.

As described above, when the pixel data is latched to the corresponding latch circuit 20, that data is applied to the comparison circuit 21.

In the comparison circuit 21, a count value signal Sc {FIG. 3 (c)} that is supplied from a counter 6 via a line 9 is compared with the output of the latch circuit 20, that is, the pixel data. The counter 6 counts the number of pulses that are supplied thereto via an input terminal 3, and generates the count value signal Sc. This counting operation of the counter 6 is repeated for each time that there is reset at the fall of the latch pulse Sb shown in FIG. 3 (b), which is supplied to each of the latch circuits 20, 20, ... from the input terminal 2 via the lines 5.

The comparison circuit 21 outputs an output signal {FIG. 3 (d)} at the time when the count value Sc is in agreement with the output of the latch circuit 20, and this output signal is then applied to the flip-flop 22 as a reset pulse. The flip-flop 22 is set by the supply via line 10, of another output signal in the status where the latch pulse Sb has been delayed by a delay circuit 8. The flip-flop 22 outputs an output signal Se (not shown in FIG. 3) which has a pulse width corresponding to the brightness of one of the pixel data stored in one of the storage divisions in the shift register SR. The output signal Se is then supplied to the drive circuit 23. The delay circuit 8 compensates for the time delay that occurs in the signals Sd by the existence of the comparison circuit 21 and the latch circuit 20. When the time delay is not large, the delay circuit 8 can be omitted with the latch pulse Sb directly being inputted to the flip-flop 22.

The output signals Se from the flip-flops 22 are amplified in the drive circuits 23 in the drive signal generation circuits SU1, SU2, .... The drive circuits 23 output signals Seo (FIG. 3 (e)) that have pulse widths respectively corresponding to the brightness of pixel data stored in the storage divisions in the shift register SR. The output signals Seo are selectively supplied to the corresponding light emitting elements LED11 - LED1m in the photoelectric element array PEA1.

When two photoelectric element arrays are used, the normal method of independently driving the light emitting elements in each of the arrays is as shown in FIG. 5 for example, by the provision of the respectively dedicated drive circuits 23, 23, ... to all of the light emitting elements. During the period that the switching control signal Sf of FIG. 3 (f) which is supplied to the terminal 4 is high level, it is possible for the array PEA1 to operate, while during the period that the switching control signal Sf is at low level, it is possible for the array PEA2 to operate. This is a drive method that selectively uses one of the two photoelectric element arrays PEA1, PEA2.

In the drive apparatus of the photoelectric element array of the present invention, as shown in FIG. 4, anodes 30 of the corresponding light emitting elements in the arrays are connected. Then, cathodes (not shown) of the light emitting elements in each array are connected in common so that a required light emitting element can be easily selected. When compared to the normal drive method described above, it is possible to reduce the number of drive signal generation circuits that include the drive circuit 23 by half.

Moreover, conversely to what has been described above, the cathodes of the corresponding light emitting elements in the arrays can be connected and then the anodes can be connected in common so that the selection of the required light emitting element is facilitated.

The operating status in the description above is for a series of operating status in the case when the data (o) from the input terminal 1 is supplied to the shift register SR. In this operating status, the switching control signal Sf of FIG. 3 (f) which is supplied to the input terminal 4 is at high level, and the photoelectric element array PEA1 is in a status where it can operate. That is, the respective light emitting elements LED11, LED12, ... in the array PEA1 can emit light due to the respective drive circuits 23, 23, {FIG. 3 (h).}

Then, when the data (e) is supplied to the shift register SR from the input terminal 1, as described for the data (o), signals See shown in FIG. 3 (e), that have pulse widths respectively corresponding to the brightness of the pixel data that are stored in each of the storage divisions in the shift register SR are selectively supplied to the corresponding light emitting elements LED21 - LED2m in the photoelectric element array PEA2. In this operating status, the switching control signal Sf of FIG 3 (f) which is supplied to the input terminal 4 is at low level. By the inversion of this low level switching control signal Sf by an inverter 7, the array PEA2 is made the operable status. By this, the respective light emitting elements LED21, LED22, .. emit light due to the respective drive circuits 23, 23, ... {FIG. 3 (g)}

As has been described above, in the photoelectric element array drive apparatus of the present invention shown in FIG. 1, by means of the data (o) and the data (e) that are supplied successively and serially on the time axis, to the input terminal 1 during the drive period for one line shown in FIG. 3 (a), the M number of light emitting elements LED11, LED12, ... of the photoelectric element array PEA1 are controlled so as to correspond to the M number of pixel data that configure the data (o) and the M number of light emitting elements LED21, LED22, ... of the photoelectric element array PEA2 are controlled so as to correspond to the M number of pixel data that configure the data (e).

Contents of the data (e) and the data (o) that are successively and serially supplied on the time axis to the input terminal 1 during the drive period of one line are predetermined so that light beams that are irradiated from each of the M number of light emitting elements in the two arrays PEA1 and PEA2 are set in a linear status where these light beams are aligned in the same pixel array order as that of the original pixel data, in a linear region set in space.

Then, the contents of the data (o) and the data (e) differ in accordance with the number of photoelectric element arrays arranged in parallel and the gap therebetween.

The following is a description of an apparatus for driving photoelectric element arrays of the present invention shown in FIG. 2, with reference to FIG. 3. In the drive apparatus shown in FIG. 1, N arrays of data that correspond to the number N of photoelectric element arrays that are driven in the drive period for one line, which arrays of data are arranged in series on the time axis are required as input pixel data. On the contrary, the pixel data that should be inputted to the drive apparatus shown in FIG. 2 is one series of pixel data aligned on the time axis which corresponds to the total number of light emitting elements that are to be driven in a drive period for one line.

For the case when the drive apparatus shown in FIG. 2 is described with reference to FIG. 3, the data array of FIG. 3 (a), differs from the data array that is inputted to the drive apparatus of FIG. 1 as described above. However, the timing of each of the signals other than FIG. 3 (a) is the same for the drive apparatus of FIG. 1 and FIG. 2. In the following description, data that is equivalent to that of FIG. 3 (a) will be omitted from FIG. 3 and FIG. 3 (b) through (h) will be used as they are.

In FIG. 2, a shift register SRa to which pixel data from an input terminal 1 is supplied, requires such a storage capacity that all of pixel data that exist in a drive period for one line can be stored. For example, in the same manner as the drive apparatus shown in FIG. 1, when the drive apparatus that is shown in FIG. 2 is configured so as to be provided with two photoelectric element arrays, the shift register SRa should have a storage capacity which is twice that of the shift register SR of FIG. 1.

The shift register SRa of FIG. 2 is of the serial-in/parallel-out type and has a storage capacity of (number N of photoelectric element arrays) x (number M of light emitting elements of one array) x (bit number A of one pixel data) = N·M·A bits.

Then, in the shift register SRa, m1a, m1b, m2a, m2b depicted inside respective blocks show storage divisions that have the bit number A of the pixel data that correspond to respective pixels. That is, the shift register SRa is provided with 2M (which is the total of the M number of storage divisions m1a to mma not shown and the M number of storage division m1b to mmb not shown) number of storage divisions with the bit numbers A, and which is equivalent to at least the total number 2M of light emitting elements that are provided to the two photoelectric element arrays.

In FIG. 2, each of the M number of light emitting elements LED1l to LEDlm in a photoelectric element array PEA1 is supplied with a drive signal that is generated by applying individual pixel data that is stored in each of the storage divisions m1a, m2a, ... in the shift register SRa from an input terminal 1, to each drive signal generation circuit shown in its entirety by the frames SU1a, SU2a, ... shown by dotted lines in FIG. 2. This causes the respective light emitting elements LED11 to LED1m to generate light intensities in accordance with the individual pixel data.

Each of the M number of light emitting elements LED21 to LED2m in a photoelectric element array PEA2 is supplied with a drive signal that is generated by applying the individual pixel data that is stored in each of the storage divisions m1b, m2b, ... in the shift register SRa from the input terminal 1, to the each drive signal generation circuit SU1a, SU2a, ... This causes the respective light emitting elements LED21 to LED2m to generate light intensities in accordance with the individual pixel data.

The light emitting elements LED11 to LED1m in the array PEA1 emit light for the duration of a first predetermined period (one half of the drive period for one line) at intensities in accordance with the individual pixel data corresponding to the respective light emitting elements. Then, after the completion of the first period for which the light emitting elements LED11 to LED1m performed light emission operation, the light emitting elements LED21 to LED2m of the array PEA2 emit light for the duration of a second predetermined period (one half of the single line drive period) at intensities in accordance with the individual pixel data corresponding to the respective light emitting elements.

The M number of light emitting elements that are respectively provided to each of the photoelectric element arrays PEA1, PEA2 are displaced with a required gap Ep in the direction of their arrangement. The two arrays PEA1 and PEA2 are driven so as to emit light successively and serially on the time axis and so as a result, a degree of resolution equivalent to the degree of resolution obtained when the light emitting elements of all portions (M number) of photoelectric element arrays are arranged in lines, is obtained by 2M number of light emitting elements aligned in the two arrays arranged in parallel in space.

As described above, each of the storage divisions in the shift register SRa shown in FIG. 2 has such a storage capacity that corresponds to the number of bits A of a pixel data that corresponds to a pixel. The number of these storage divisions corresponds to the total number of light emitting elements in the plural number of photoelectric element arrays. The pixel data of a number (2M in this embodiment) corresponding to the total number of light emitting elements that are to be driven in a drive period for one line is supplied to the shift register SRa as the pixel data of one string arranged on the time axis.

At the time when the storage of the 2M number of pixel data to the storage divisions m1a, m1b, m2a, m2b, ... mmb is finished, the pixel data stored in the M number of storage divisions m1a, m2a, ... mma are respectively inputted via lines 16, 18, ... to shift registers 24, 24, ... provided to the drive signal generation circuits SU1a, SU2a In addition, the pixel data that are stored in the M number of storage divisions m1b, m2b, ... mmb are respectively inputted via the lines 17, 19, ... to data selectors 25, 25, ... provided to the drive signal generation circuits SU1a, SU2a ....

Each of the data selectors 25, 25, ... is supplied from a terminal 4 with a switching control signal Sf shown in FIG. 3 (f) which is at the high level at the time of the start of a drive period for one line, so that switching operation is performed to respectively apply the data stored in the M number of storage divisions m1b, m2b, ... to latch circuits 20, 20, ... . Each of the latch circuits 20, 20, ... stores the pixel data applied thereto by a latch pulse Sb {FIG. 3 (b)} supplied thereto from an input terminal 2 via a line 5.

The M number of the picture element data stored in the M number of storage divisions m1a, m2a, ... in the shift register SRa are respectively applied to the data selectors 25, 25, ... after those data have been subjected to time delay corresponding to one half of the drive period for one line, by the shift registers 24, 24, ... provided to the drive signal generation circuits SU1a, SU2a ....

At a time when the switching control signal Sf shown in FIG. 3 (f) supplied form the terminal 4 is in the low level status during the drive period for one line, the data selectors 25, 25, ... perform switching operation so that the pixel data stored in the M number of storage divisions m1a, m2a, ... in the shift register SRa are respectively applied to the corresponding latch circuits 20, 20, ... . The latch circuits 20, 20, ... respectively stores the pixel data that have been applied thereto by the latch pulse Sb {FIG. 3 (b)} supplied thereto from the input terminal 2 via the line 5.

Each of the drive signal generation circuits SU1a, SU2a, ... shown in FIG. 2 has configuration that the shift register 24 and data selector 25 are added to each of the drive signal generation circuits SU1, SU2, ... shown in FIG. 1. In each of the drive signal generation circuits SU1a, SU2a, ... shown in FIG. 2, the same signal processing as that described, with reference to FIG. 1, is performed with respect to the pixel data that has been stored in each of the storage divisions in the shift register SRa, latched to the latch circuit 20 and outputted therefrom. The pixel data for which this signal processing has been implemented cause the drive signal generation circuits SU1a, SU2a, ... to perform drive of the light emitting elements in the photoelectric element arrays.

More specifically, a comparison circuit 21 to which the output of the latch circuit 20 is applied, performs operation for the output pixel data of the latch circuit 20 and a count value Sc that is supplied from a counter 6 via line 9. The counter 6 counts the total number of counted pulses supplied via an input terminal 3 and generates the count value Sc. The counting operation of the counter 6 is repeated for each time there is reset at the time of fall of the latch pulses Sb shown in FIG. 3 (b) which are supplied to each latch circuit 20, 20, ... from the input terminal 2 via the line 5.

Then, in the comparison circuit 21, an output signal Sd {FIG. 3 (d)} is outputted at the time when the count value Sc is in agreement with the output pixel data count value of the latch circuit 20, and this is applied to a flip-flop 22 as a reset pulse. The flip-flop 22 is set by the supply via line 10 of an output signal of the status where it is the latch pulses Sb supplied to each of the latch circuits 20, 20, ... and has been delayed by a delay circuit 8.

Then, an output signal Se (not shown) from the flip-flop 22, that is, the signal of the having a pulse width corresponding to the brightness of one of the pixel data stored in one of the storage divisions of the shift register SRa, is outputted and supplied to a drive circuit 23.

The delay circuit 8 is for compensation of the time delay that occurs in the signal Sd due to the existence of the comparison circuit 21 and the latch circuit 20. When the time delay that occurs in the signal Sd is not large, the delay circuit 8 can be omitted and the latch pulse Sb directly inputted to the flip-flop 22.

The output signal Se from the flip-flop 22 is amplified in the drive circuit 23. The drive circuit 23 outputs a signal that has a pulse width corresponding to the brightness of a pixel data stored in one of the storage divisions in the shift register SRa, as a signal Seo or See (FIG. 3 (e)) and supplied to the corresponding light emitting element in the photoelectric element array.

In the same manner as described for the drive apparatus of FIG. 1, during the period that the switching control signal Sf shown in FIG. 3 (f) supplied to the terminal 4 is at high level, the output signal Seo that are outputted from the drive circuits 23 cause the light emitting elements of the photoelectric element array PEA1 to selectively emit light. In addition, during the period that the switching control signal Sf is in the low level status, the light emitting elements of the array PEA2 selectively emit light.

When the drive apparatus of the present invention is configured using N number of photoelectric element arrays, the switching control signal Sf that can perform switching of signals of N strings is supplied to the terminal 4 and switching of the signals of N strings is performed by the data selector 25. Then, a switch device is provided between the terminal 4 and the arrays PEAl to PEAn, to switch the arrays PEAl to PEAn, synchronized with the switching of the signals in the data selector 25.

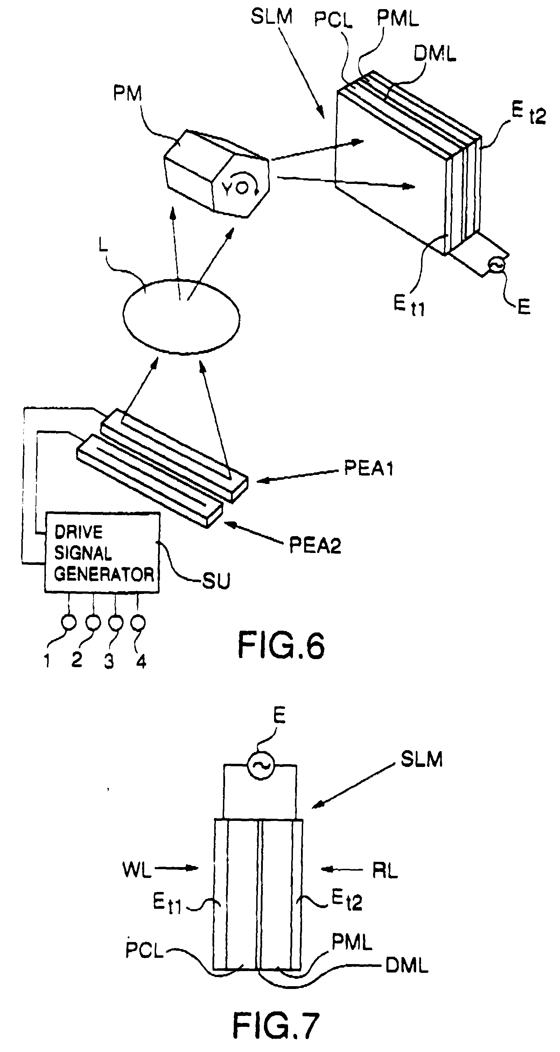

The following is a description of an apparatus which is an application of the photoelectric element array of the present invention and which is shown in FIG. 6. SU depicts a drive signal generation circuit which comprises the drive signal generation circuits SU1, SU2, ... shown in FIG. 1 or FIG. 2. Input terminals 1 to 4 correspond to the input terminals 1 to 4, respectively shown in FIG. 1 or FIG. 2. PEA1 and PEA2 are photoelectric element arrays each of which is provided with M number of light emitting elements (not shown) which are driven by output signals of the drive signal generation circuit SU. The respective M numbers of light emitting elements in the two arrays PEA1 and PEA2 are driven as described earlier with reference to FIG. 1 and FIG. 2 and emit light alternately for a duration corresponding to one half of a drive period for one line.

The application apparatus of FIG. 6 is also provided with a focussing lens L by which light beams irradiated from the arrays PEA1 or PEA2 are focussed, a polygon mirror PM that scans the focussed light beams in a required direction, and a spatial light modulator SLM that forms an image of the light information in accordance with the scanned light beams.

Light beams irradiated from the photoelectric element arrays PEA1 and PEA2 each having M numbers of light emitting elements are incident to the rotating mirror PM via the lens L. The light beams incident to the mirror PM are irradiated, as a bundle of write beams of 2M lines, onto a photoconductive layer member of the spatial light modulator SLM, during the drive period for one line and an image is formed on the photoconductive layer member. When the polygon mirror PM rotates at a required rotation speed in the direction of an arrow Y in the figure, the write light beams move at a constant shift speed from the top to the bottom of the modulator SLM.

The spatial optical modulator SLM forms an image of the light information corresponding to the 2M number of pixels in the drive period for one line. Because of this, it is possible to apply an image information of a high degree of resolution to the modulator SLM. Moreover, from each of the photoelectric element arrays PEA1 and PEA2, a bundle of light beams that have been intensity modulated by the M number of pixel data is radiated for a predetermined period (one half of the drive period for one line), must be applied to the spatial light modulator pixel data SLM by intense light beams.

As shown in FIG. 7 for example, the spatial light modulator SLM is configured by laminating a transparent electrode Et1, a photoconductive layer member PCL, a dielectric mirror DML, a photomodulation layer member PML and a transparent electrode Et2 in the order. The transparent electrodes Et1 and Et2 are configured from thin films of a transparent conductive substance. The photoconductive layer member PCL is configured using a substance that exhibits photoconductivity in the wavelength of the light used. The dielectric mirror DML is configured from a multi-layered film so that light of a required wavelength band is reflected. Furthermore, the photomodulation layer member PML is configured using a photomodulation material (such as a nematic crystal, lithium-niobium oxide, bismuth silicon oxide, lead lanthanum zirconate titanate a macromolecular crystal compound film or the like) that changes the status of light (polarization status of light, rotary polarization status of light, or scattering status of light) in accordance with a field intensity impressed to it.

E denotes a power source for impressing a required voltage across the transparent electrodes Et1, Et2. This power source E is shown in the figure as an AC power source but can be either an AC power source or a DC power source in accordance with the nature of the material configuring the photomodulation layer member PML. In FIG. 7, WL denotes a write light that is irradiated from the side of the transparent electrode Et1 and is focussed on the photoconductive layer member PCL, and this write light WL is intensity modulated by the information that is the object of display. In the photoelectric element array application apparatus shown in FIG. 6, the write light WL corresponds to 2M lines of light beams in which each M lines of light beams are radiated from each of the M number of light emitting elements in the photoelectric element arrays PEA1 and PEA2 for each drive period for one line.

In the status where a required voltage from the power source E is supplied across the transparent electrodes Et1 and Et2, the 2M lines of light beams as the write light WL that are intensity modulated for each drive period for one line by the information that is the object of display, are incident to the transparent electrode Et1 and are focussed on the photoconductive layer member PCL, the electrical resistance of the portion of the photoconductive layer member PCL to which the write light WL is irradiated, changes in accordance with the intensities of the light. By this 2M number of charge images each corresponding to the respective irradiation intensities of the 2M number of light beams are formed at the boundary between the photoconductive layer member PCL and the dielectric mirror DML. The 2M number of charge images are formed by the charges of amounts corresponding to the successive pixel data, being arranged. Then, a field intensity due to the 2M number of charge images is impressed to the photomodulation layer member PML.

In this status, when a read light RL is radiated from a light source (not shown) on the side of the transparent electrode Et2, the read light RL is incident to the spatial light modulator SLM along with path formed by transparent electrode Et2 → photomodulation layer member PML → dielectric mirror DML. When the read light RL reaches the mirror DML, it is reflected there and goes back along the path and emitted from the transparent electrode Et2. The emitted light comprises 2M lines of light beams and has passed two ways through the photomodulation layer member PML to which the field intensity due to the 2M number of charge images in the status where charges of amounts corresponding to successive pixel data are arranged. These 2M lines of light beams thus have the status of the light changing according to the successive pixel data.

When the photomodulation layer member PML changes the scattering status of the light that passes therethrough, in accordance with the field intensity that is impressed thereto, then as described above, the reflected 2M number of read light beams from the spatial light modulator SLM are in the status where the intensity of the light changes in accordance with the 2M number of successive pixel data. In addition, when the status of polarization or the status of refraction of the light that passes through the photomodulation layer member PML changes in accordance with the intensity of the impressed electrical field, the reflected 2M number of read light beams from the modulator SLM are in the status where the status of polarization or the plane of polarization of the light changes in accordance with the 2M number of successive pixel data. Also, in the latter case above, by passing the light beams emitted from the modulator SLM, through an analyzer (not shown), it is possible to make the light beams into a status where the intensity of the light beams changes in accordance with the 2M number of successive pixel data.

Then, a polarization beam splitter (not shown) for example, is arranged on the side of the transparent electrode Et2 in the spatial light modulator SLM in the status where a field intensity corresponding to the pixel data is impressed to the photomodulation layer member PML. When the read light RL is irradiated to the polarization beam splitter and the S-polarized light component taken from it is irradiated from the side of the transparent electrode Et2, then as described earlier with reference to FIG. 7, the read light RL is emitted from the spatial light modulator SLM as 2M lines of reflected light beams for which the plane of polarization changes in accordance with the 2M successive pixel data that are linearly arranged. When this reflected light beams are irradiated to the polarization beam splitter and the P-polarized component is taken, then 2M number of light spots arranged linearly are obtained.

In the photoelectric element array application apparatus shown in FIG. 6, the 2M lines of light beams in which M lines of light beams are respectively radiated from the M number of light emitting elements in the photoelectric element arrays PEA1 and PEA2 for each drive period for one line in the status where those light beams are respectively intensity modulated by the pixel data to be recorded, cause write operation corresponding to the status that one straight line of light formed by the 2M number of light spots arranged in a line and formed on the spatial light modulator SLM over a predetermined time.

Accordingly, when compared to the case of a conventional photoelectric element array application apparatus using beam spots by a laser where a write light is intensity modulated by time series signals due to pixel data of the image that is the object of display, polarized in the horizontal and the vertical directions by polarizers and irradiated to the modulator SLM and an image information written, the application apparatus of the photoelectric element array of the present invention has a projection time of each pixel, of several times (M times) the number of pixels. That is, write operation is favorably performed with respect to the modulator SLM and so in the apparatus which is an application of the photoelectric element array of the present invention, it is possible to use favorably the modulator SLM that generally has a low sensitivity, thereby enabling the recording and reproduction of images at high resolution.

## Claims

1. Apparatus for recording image information as a charge image in a spatial light modulator, comprising:
a plurality of photoelectric element arrays (PEA1, PEA2, ...), each array comprising a plurality of photoelectric elements aligned with each other, the plurality of arrays being arranged such that (i) the lines of photoelectric elements are parallel, (ii) the photoelectric elements in adjacent arrays are offset in the direction of said lines by a predetermined offset and (iii) said lines are separated by a distance equal to an integral multiple of the predetermined offset;
means arranged to drive the photoelectric element arrays according to successive pixel data representing the image information to cause the photoelectric elements to emit light beams according to the pixel data; this means comprising:
storage means (SR) arranged to store pixel data of a plurality of pixels successively and to output the stored data of said plurality of pixels simultaneously; and
controller means (SU1, SU2) responsive to the output pixel data to control the photoelectric elements to emit the light beams such that the photoelectric elements in each photoelectric element array are simultaneously driven and the photoelectric elements of successive photoelectric element arrays are successively driven according to a first predetermined timing; and
means (L,PM) arranged to guide the emitted light beams to the spatial light modulator according to a second predetermined timing whereby the charge image is formed in the spatial light modulator by the emitted beams of light.

2. Apparatus according to Claim 1, in which the storage means comprises a plurality of shift registers corresponding to the plurality of photoelectric elements in an array, the shift registers being serially connected.

3. Apparatus according to Claim 1 or 2 in which the controller means comprises;
a plurality of latches (20) responsive to each of successive reference latch signals to latch the output pixel data of said plurality of pixels respectively;
counter means (6), responsive to each of the successive reference latch signals and to reference count signals, arranged to count a specific number of count signals between successive reference latch signals; and
means (21,22,23) arranged to compare the latched pixel data and the counted reference count signals and to drive the photoelectric elements of one of the photoelectric arrays simultaneously according to the results of the comparison.

4. Apparatus according to Claim 3 further comprising means (8) responsive to the reference latch signals to compensate for a time delay in driving the photoelectric elements arising from the latching and comparison operations.

## Patentansprüche

1. Gerät zum Aufzeichnen von Bildinformation als Ladungsbild in einem Ortslichtmodulator, enthaltend:
eine Vielzahl photoelektrischer Elementanordnungen (PEA1, PEA2, ...), von denen jede Anordnung eine Vielzahl miteinander ausgerichteter photoelektrischer Elemente aufweist, die Vielzahl Anordnungen derart angeordnet ist, daß (i) die Zeilen von photoelektrischen Elementen parallel zueinander sind, (ii) die photoelektrischen Elemente in benachbarten Anordnungen in der Richtung der Zeilen um einen vorbestimmten Versatz gegeneinander versetzt sind und (iii) die Zeilen um eine Strecke voneinander beabstandet sind, die gleich einem ganzzahligen Vielfachen des vorbestimmten Versatzes ist;
Mittel zum Ansteuern der photoelektrischen Elementanordnungen gemäß die Bildinformation darstellenden, aufeinanderfolgenden Pixeldaten, um zu bewirken, daß die photoelektrischen Elemente gemäß den Pixeldaten Lichtstrahlen aussenden; welche Mittel enthalten:
Speichermittel (SR) zum aufeinanderfolgenden Speichern von Pixeldaten einer Vielzahl von Pixel und zum gleichzeitigen Ausgeben der gespeicherten Daten der Vielzahl von Pixel; und
Steuermittel (SU1, SU2), die auf die Ausgabepixeldaten ansprechen, zum Steuern der photoelektrischen Elemente zum Aussenden der Lichtstrahlen derart, daß die photoelektrischen Elemente in jeder photoelektrischen Elementanordnung gleichzeitig angesteuert werden und die photoelektrischen Elemente von aufeinanderfolgenden photoelektrischen Elementanordnungen aufeinanderfolgend angesteuert werden gemäß einer ersten vorbestimmten Taktgabe; und
Mittel (L, PM) zum Führen der ausgesendeten Lichtstrahlen zum Ortslichtmodulator gemäß einer zweiten vorbestimmten Taktgabe, wodurch das Ladungsbild im Ortslichtmodulator durch die ausgesendeten Lichtstrahlen ausgebildet wird.

2. Gerät nach Anspruch 1, bei dem die Speichermittel eine Vielzahl Schieberegister entsprechend der Vielzahl photoelektrischer Elemente in einer Anordnung aufweisen, wobei die Schieberegister seriell miteinander verbunden sind.

3. Gerät nach Anspruch 1 oder 2, bei dem die Steuermittel enthalten:
eine Vielzahl Latchglieder (20), die auf jedes von aufeinanderfolgenden Referenzlatchsignalen ansprechen, zum jeweiligen Speichern der Ausgabepixeldaten der Vielzahl von Pixel;
eine Zählereinrichtung (6), die auf jedes der aufeinanderfolgenden Referenzlatchsignale und auf Referenzzählsignale anspricht, zum Zählen einer spezifischen Anzahl von Zählsignalen zwischen aufeinanderfolgenden Referenzlatchsignalen; und
eine Einrichtung (21, 22, 23) zum Vergleichen der in den Latchgliedern gespeicherten Pixeldaten und der gezählten Referenzzählsignale zum gleichzeitigen Ansteuern der photoelektrischen Elemente einer der photoelektrischen Elementanordnungen in Abhängigkeit von den Vergleichsergebnissen.

4. Gerät nach Anspruch 3, ferner enthaltend eine Einrichtung (8), die auf die Referenzlatchsignale anspricht, zum Kompensieren einer bei der Ansteuerung der photoelektrischen Elemente durch die Latch- und Vergleichsoperationen hervorgerufenen Zeitverzögerung.

## Revendications

1. Dispositif pour enregistrer des informations d'image en tant qu'image de charges dans un modulateur de lumière spatial, comprenant:
une pluralité de matrices d'éléments photoélectriques (PEA1, PEA2, ...), chaque matrice comprenant une pluralité d'éléments photoélectriques alignés entre eux, la pluralité de matrices étant agencées de façon que (i) les lignes d'éléments photoélectriques soient parallèles, (ii) les éléments photoélectriques des matrices adjacentes soient décalés dans la direction desdites lignes d'un décalage prédéterminé, et (iii) lesdites lignes soient séparées d'une distance égale à un multiple entier du décalage prédéterminé;
des moyens agencés pour commander les matrices d'éléments photoélectriques en fonction de données de pixels successifs représentant les informations d'images, pour que les éléments photoélectriques émettent des faisceaux de lumière en fonction des données de pixels; ces moyens comprenant:
des moyens de stockage (SR) agencés de façon à stocker successivement des données de pixels d'une pluralité de pixels, et à délivrer simultanément en sortie les données stockées de ladite pluralité de pixels; et
des moyens de contrôleur (SU1, SU2) sensibles aux données de pixels de sortie, pour ordonner aux éléments photoélectriques d'émettre les faisceaux de lumière de facon que les éléments photoélectriques de chaque matrice d'éléments photoélectriques soient simultanément commandés, et que les éléments photoélectriques des matrices d'éléments photoélectriques successives soient successivement commandés conformément à un minutage prédéterminé; et
des moyens (L, P, M) agencés pour guider les faisceaux de lumière émis vers le modulateur de lumière spatial conformément à un deuxième minutage prédéterminé, de façon que l'image de charges soit formée dans le modulateur de lumière spatial par les faisceaux de lumière émis.

2. Dispositif selon la revendication 1, dans lequel les moyens de stockage comprennent une pluralité de registres à décalage correspondant à la pluralité d'éléments photoélectriques d'une matrice, les registres à décalage étant connectés en série.

3. Dispositif selon la revendication 1 ou 2, dans lequel les moyens de contrôleur comprennent:
une pluralité de verrous (20) sensibles à chacun des signaux de référence successifs, pour verrouiller les données de pixels de sortie respectivement de ladite pluralité de pixels;
des moyens de compteur (6), sensibles à chacun des signaux de verrouillage successifs et aux signaux de compte de référence, agencés de façon à compter un nombre spécifique de signaux de compte entre des signaux de verrou de référence successifs; et
des moyens (21, 22, 23) agencés pour comparer les données de pixels verrouillées et les signaux de compte de référence comptés, et pour commander simultanément les éléments photoélectriques de l'une des matrices photoélectriques, conformément aux résultats de la comparaison.

4. Dispositif selon la revendication 3, comportant en outre des moyens (8) sensibles aux signaux de verrouillage de référence pour compenser un retard pour commander les éléments photoélectriques provenant des opérations de verrouillage et de comparaison.
